# EUROPÄISCHE PATENTANMELDUNG

(11) **EP 4 703 838 A1**
(43) Veröffentlichungstag der Anmeldung: **04.03.2026**
(21) Anmeldenummer: 24197590.3
(22) Anmeldetag: 30.08.2024
(51) Int. Cl.: G05D 1/672, G05D 105/28, G05D 107/70, G05D 109/10, G05D 111/10, G06T 7/73, G05D 1/244, G05D 111/50

(54) **VERFAHREN UND VORRICHTUNG ZU EINER WINKELBESTIMMUNG VON EINZELNEN KOMPONENTEN EINES ROUTENZUGS**

(71) Anmelder: Siemens Aktiengesellschaft, 80333 München (DE)
(72) Erfinder: Bergmann, Dominik, 83679 Sachsenkam (DE); Ebelsberger, Gerit, 81737 München (DE); Gruß, Oskar, 80638 München (DE)
(74) Vertreter: Siemens Patent Attorneys

(57) **Zusammenfassung**

Es wird ein Verfahren zu einer Winkelbestimmung von einzelnen Komponenten eines Routenzugs vorgeschlagen, wobei die Komponenten mindestens einen Anhänger und ein Zugfahrzeug umfassen, wobei
- eine Berechnung eines Gierwinkels wenigstens eines der Anhänger in einer Abhängigkeit zu einer räumlichen Orientierung bezüglich des Zugfahrzeugs erfolgt,
gekennzeichnet durch folgende Schritte:
- Anbringen von wenigstens einem optischen Marker an wenigstens einem Anhänger;
- Erfassen von wenigstens einem optischen Marker an wenigstens einem Anhänger mittels einer Kamera;
- Berechnen eines Rotationsvektors für wenigstens einen erfassten optischen Marker pro Anhänger;
- wobei die Berechnung des Gierwinkels für wenigstens einen Anhänger des Routenzugs in Abhängigkeit von dem Rotationsvektor erfolgt; und
- eine erste Positionsbestimmung für einen mit dem Zugfahrzeug direkt gekoppelten ersten Anhänger, welche relativ zur Position der Kamera bereitgestellt wird, wobei die erste Positionsbestimmung von einem ersten Gierwinkel des ersten Anhängers und einer Länge des ersten Anhängers abhängig ist und als ein Ergebnis eine Position des ersten Anhängers bereitgestellt wird.

Weiterhin betrifft die Erfindung eine Vorrichtung.

## Beschreibung

Die Erfindung betrifft ein Verfahren gemäß dem Oberbegriff des Patentanspruches 1 sowie eine Vorrichtung gemäß dem Oberbegriff des Patentanspruches 12.

Eine Reduzierung einer Anzahl verbauter Sensoren und damit eine Kostensenkung für einen Betrieb eines Routenzugs, insbesondere als ein fahrerloses Transportsystem, stellt eine erhebliche technische Herausforderung dar. Trotz einer geringeren Anzahl an Sensoren muss der Schutz von Maschinen und Personen weiterhin gewährleistet bleiben. Dies erfordert innovative Ansätze in der Sensorik und Steuerungstechnik, um die Sicherheit und Effizienz des Systems zu maximieren. Gleichzeitig steht dieser Herausforderung eine zunehmende Vielfalt an Modelltypen und möglichen Anhängertypen für Routenzüge gegenüber, die eine hohe Kompatibilität und Flexibilität in einer mechatronischen Systemintegration erfordern. Die Entwicklung von Lösungen, die sowohl die Anzahl der Sensoren reduzieren als auch die Kompatibilität mit verschiedenen Anhängertypen sicherstellen, ist daher von zentraler Bedeutung.

Der vorliegenden Erfindung liegt die Aufgabe zugrunde, eine Winkelbestimmung für einzelne Komponenten eines Routenzugs mittels einer geringeren Anzahl von Sensoren und mit einer höheren Kompatibilität zwischen den einzelnen Komponenten bereitzustellen.

Die Aufgabe wird durch ein Verfahren mit den Merkmalen des unabhängigen Patentanspruches 1 sowie durch eine Vorrichtung mit den Merkmalen des unabhängigen Patentanspruches 12 gelöst. In den abhängigen Patentansprüchen sind vorteilhafte Ausgestaltungen und Weiterbildungen der Erfindung angegeben.

Das erfindungsgemäße Verfahren zu einer Winkelbestimmung von einzelnen Komponenten eines Routenzugs, wobei die Komponenten mindestens einen Anhänger und ein Zugfahrzeug umfassen, wobei
- eine Berechnung eines Gierwinkels wenigstens eines der Anhänger in einer Abhängigkeit zu einer räumlichen Orientierung bezüglich des Zugfahrzeugs erfolgt,
wobei erfindungsgemäß die folgenden Schritte bereitgestellt werden:
- Anbringen von wenigstens einem optischen Marker an wenigstens einem Anhänger;
- Erfassen von wenigstens einem optischen Marker an wenigstens einem Anhänger mittels einer Kamera;
- Berechnen eines Rotationsvektors für wenigstens einen erfassten optischen Marker pro Anhänger;
- wobei die Berechnung des Gierwinkels für wenigstens einen Anhänger des Routenzugs in Abhängigkeit von dem Rotationsvektor erfolgt; und
- eine erste Positionsbestimmung für einen mit dem Zugfahrzeug direkt gekoppelten ersten Anhänger, welche relativ zur Position der Kamera bereitgestellt wird, wobei die erste Positionsbestimmung von einem ersten Gierwinkel des ersten Anhängers und einer Länge des ersten Anhängers abhängig ist und als ein Ergebnis eine Position des ersten Anhängers bereitgestellt wird.

Der Routenzug ist ein Logistiksystem, das in der industriellen Fertigung und im Materialfluss eingesetzt wird. Es besteht aus einem Zugfahrzeug und mehreren Anhängern oder Wagen, die in festgelegten Routen Material und Waren zwischen verschiedenen Stationen transportieren. Der Routenzug ermöglicht eine effiziente und flexible Versorgung der Produktionslinien, indem er Material bedarfsgerecht und just-in-time liefert.

Das Zugfahrzeug ist ein motorisiertes Fahrzeug, das dazu verwendet wird, Anhänger oder andere Lasten zu ziehen. Es kann in verschiedenen Kontexten eingesetzt werden, wie zum Beispiel in der Landwirtschaft, im Güterverkehr oder in der industriellen Fertigung. In der Logistik, insbesondere bei Routenzügen, dient das Zugfahrzeug dazu, mehrere Anhänger oder Wagen entlang einer festgelegten Route zu bewegen. Das Zugfahrzeug ist, insbesondere ein fahrerloses Transportsystem.

Der Anhänger ist ein unmotorisiertes Fahrzeug, das von einem Zugfahrzeug gezogen wird. Anhänger werden verwendet, um verschiedene Arten von Lasten zu transportieren, sei es in der Landwirtschaft, im Güterverkehr oder in der industriellen Fertigung. Sie können unterschiedliche Formen und Größen haben, je nach Verwendungszweck, und sind oft mit Rädern und einer Kupplung und einer Deichsel ausgestattet, um sie sicher mit dem Zugfahrzeug zu verbinden.

Optische Marker sind visuelle Symbole, die Informationen codieren und von speziellen Lesegeräten oder Kameras erkannt und interpretiert werden können. Ein bekanntes Beispiel für einen optischen Marker ist der QR-Code (Quick Response Code), der Data Matrix Code und der ArUco Code.

Der Gierwinkel (auch Yaw-Winkel genannt) beschreibt die Drehung eines Fahrzeugs um seine vertikale Achse. Diese Achse verläuft senkrecht zur Fahrbahn und durch den Schwerpunkt des Fahrzeugs. Der Gierwinkel ist ein wichtiger Parameter in der Fahrzeugdynamik und wird verwendet, um die Richtung zu beschreiben, in die die Fahrzeuglängsachse zeigt.

Der Rotationsvektor ist ein Vektor, der die Rotation eines Objekts beschreibt. Er gibt die Richtung der Drehachse und die Größe der Drehgeschwindigkeit an. Die Richtung des Rotationsvektors entspricht der Achse, um die das Objekt rotiert, und die Länge des Vektors ist proportional zur Winkelgeschwindigkeit der Rotation. Rotationsvektoren werden in verschiedenen Bereichen verwendet, wie zum Beispiel in der Physik zur Beschreibung der Erdrotation oder in der Robotik zur Steuerung von Bewegungen.

Die Position beschreibt den genauen Ort oder die Lage eines Objekts oder einer Person in einem bestimmten Raum oder auf einer Fläche. Diese Position kann durch Koordinaten in einem Koordinatensystem angegeben werden, wie zum Beispiel in einem kartesischen Koordinatensystem (x, y, z) oder durch geografische Koordinaten (Breitengrad, Längengrad). Als Position ausgedrückt werden können, insbesondere eine Zugfahrzeugposition und/oder eine Anhängerposition, wobei die Position des Zugfahrzeugs und des Anhängers, insbesondere in einem gemeinsamen Koordinatensystem abbildbar sind. Die Position des Anhängers und des Zugfahrzeugs korrespondiert hierbei jeweils mit einem Raum, der durch eine Außenkontor des Zugfahrzeugs oder Anhänger aufgespannt wird. Diese räumliche Korrespondenz zwischen Position und Raum, der durch die jeweilige Außenkontur aufgespannt wird, kann genutzt werden um, insbesondere basierend auf der Fahrzeugposition und der Anhängerposition oder basierend auf zwei Anhängerpositionen eine mögliche Kollision zu erfassen.

Durch die vorliegende Erfindung wird ein Verfahren zu einer vorteilhaften Winkelbestimmung, mit gesteigerter Kompatibilität, zwischen einzelnen Komponenten eines Routenzugs beschrieben. Das ist deshalb der Fall, weil der Routenzug durch ein Anbringen von optischen Markern an den einzelnen Anhängern, die Anbindung verschiedener Anhänger, insbesondere verschiedener Bauarten und/oder Herstellertypen ermöglicht.

Mit anderen Worten kann vorteilhafterweise eine Zahl von Anhängern mit unterschiedlicher Ausführung einer Gierwinkelmessung und auch gänzlich ohne eine Messeinrichtung für den Gierwinkel in einem gemeinsamen Routenzug betrieben werden, da jeder Anhänger einen optischen Marker erhält.

Die Gierwinkelmessung bezieht sich auf die Erfassung und Bestimmung des Gierwinkels, also der Drehung eines Fahrzeugs um seine vertikale Achse. Diese Messung ist besonders wichtig in der Luftfahrt, Schifffahrt und Fahrzeugtechnik, um die Ausrichtung und Bewegungen eines Fahrzeugs präzise zu überwachen und zu steuern. Zur Messung des Gierwinkels werden häufig Drehratensensoren oder Gyroskope verwendet. Diese Geräte erfassen die Winkelgeschwindigkeit um die vertikale Achse und ermöglichen so die Berechnung des aktuellen Gierwinkels. In der industriellen Anwendung können auch optische Systeme wie Autokollimatoren eingesetzt werden, die durch Reflexionen präzise Winkelmessungen durchführen

Die Vorrichtung zu einer Winkelbestimmung von einzelnen Komponenten eines Routenzugs, wobei die Komponenten mindestens einen Anhänger und ein Zugfahrzeug umfassen, wobei eine Recheneinheit für eine Berechnung eines Gierwinkels wenigstens eines Anhängers in einer Abhängigkeit zu einer räumlichen Orientierung bezüglich des Zugfahrzeugs ausgebildet ist,

Erfindungsgemäß umfasst die Vorrichtung eine Kamera, welche am Zugfahrzeug angeordnet ist, die dazu ausgebildet ist wenigstens einen an den Anhänger angebrachten optischen Marker zu erfassen und der Recheneinheit bereitzustellen, wobei die Recheneinheit dazu ausgebildet ist, wenigstens einen Rotationsvektor für wenigstens einen erfassten optischen Marker pro Anhänger zu berechnen und die Berechnung des Gierwinkels für wenigstens einen Anhänger des Routenzugs in Abhängigkeit von dem Rotationsvektor erfolgt, wobei die Recheneinheit für eine erste Positionsbestimmung für einen mit dem Zugfahrzeug direkt gekoppelten ersten Anhänger ausgebildet ist, wobei die erste Positionsbestimmung relativ zur Position der Kamera erfolgt, wobei die erste Positionsbestimmung von dem Gierwinkel des ersten Anhängers und einer Länge des ersten Anhängers abhängig ist und als ein Ergebnis eine Position des ersten Anhängers bereitstellt.

Der erste Anhänger ist ein Anhänger, welcher mit einem Zugfahrzeug gekoppelt ist.

Der zweite Anhänger ist ein Anhänger, welcher mit einem anderen zweiten Anhänger oder ersten Anhänger gekoppelt ist.

Die Recheneinheit kann ein Mikrocontroller, ein industrieller Rechner, eine speicherprogrammierbare Steuerung oder eine Rechnerinstanz in einem Rechenzentrum sein.

Durch die vorliegende Erfindung wird eine Vorrichtung zu einer vorteilhaften Winkelbestimmung, mit einer geringeren Anzahl von Sensoren, zwischen einzelnen Komponenten eines Routenzugs beschrieben. Das ist deshalb der Fall, weil der erste Anhänger des Routenzugs keine Sensorik zur Gierwinkelmessung an einer jeweiligen Deichsel benötigt.

Mit anderen Worten, wird vorteilhafterweise keine zusätzliche Auswerteelektronik seitens des Anhängers benötigt.

In einer vorteilhaften Weiterbildung der Erfindung wird eine zweite Positionsbestimmung für einen an den ersten Anhänger angehängten zweiten Anhänger bereitgestellt, wobei die zweite Positionsbestimmung wenigstens abhängig von dem Ergebnis der ersten Positionsbestimmung und einem zweiten Gierwinkel und der Länge des am ersten Anhänger angehängten zweiten Anhängers bereitgestellt wird.

Der Zweite Gierwinkel ist nicht als Teil einer fortlaufenden Aufzählung von Gierwinkeln zu verstehen, sondern beschreibt einen zweiten Typ von Gierwinkel, welcher einen Gierwinkel zwischen zwei Anhängern meint.

Mit anderen Worten wird die Erfassung des zweiten Gierwinkels korrespondierend zu einer Anzahl von gekoppelten Anhängern, unter einem Abzug eines ersten Anhängers mit einem ersten Gierwinkel, instanziiert.

Dadurch kann vorteilhafterweise die Positionsbestimmung in Form der zweiten Positionsbestimmung für Routenzüge mit mehr als einem Anhänger bereitgestellt werden. Das ist deshalb der Fall, weil die vorteilhafte Weiterbildung neben einer Koppelung zwischen Zugfahrzeug und Anhänger, auch eine Koppelung zwischen zwei Anhängern vorsieht.

Mit anderen Worten, erlaubt die Weiterbildung durch Berücksichtigung der Kopplung zweier Anhänger eine vorteilhafte Verlängerung des Routenzugs unter fortgeführter Bereitstellung der Winkelerkennung für die Anhänger des Routenzugs.

Gemäß einer vorteilhaften Ausgestaltung wird durch eine Überquerung wenigstens einer virtuellen Landmarke und/oder während einer Befahrung eines vorgegebenen Areals durch das Zugfahrzeug die Kamera gestartet und einen Videostream erfasst.

Die virtuelle Landmarke kann Teil einer virtuellen Karte sein, wobei der Routenzug als ein fahrerloses Transportsystem betrieben werden kann, welches innerhalb der virtuellen Landkarte navigiert und eine erfolgreiche Anfahrt einer virtuellen Landmarke erfasst.

Das vorgegebene Areal kann ein Bereich in einer Logistikhalle sein, insbesondere ein Wareneingang, Warenausgang oder Übergabepunkte zwischen einer Logistik und einer Produktion.

Der Videostream ist eine Methode zur Übertragung von Video- und Audiodaten in einer Echtzeit. Dabei werden die Daten kontinuierlich gesendet und empfangen, sodass das Video angesehen kann, während es noch heruntergeladen wird. Dies ermöglicht das sofortige Abspielen von Videos ohne lange Wartezeiten für einen vollständigen Download.

Dadurch ist es vorteilhafterweise möglich, ein Datenaufkommen während eines Betriebs des Routenzugs zu reduzieren. Das ist deshalb der Fall, weil die Winkelerkennung für selektiv aktiviert wird.

Dies ist besonders vorteilhaft für fahrerlose Transportsysteme mit begrenzter Rechenleistung, welche auf die Winkelerkennung nur in ausgewählten Bereichen eines Hallenlayouts zugreifen müssen.

In einer vorteilhaften Weiterbildung der Erfindung wird durch ein neuronales Netz der Rotationsvektor berechnet.

Dadurch kann vorteilhafterweise ein neuronales Netz mit seinem Charakter eines statistischen Modells genutzt werden, welches eine höhere Robustheit bei einer Erkennung von optischen Markern aufweist als Algorithmen, die auf eine Kantendetektion in Kombination einer Analyse von Geometrien zurückgreifen.

Die Kantendetektion ist ein Teil einer Segmentierung von Elementen in einer Bildverarbeitung. Ein Algorithmus der Kantendetektion ist insbesondere der Canny-Algorithmus.

Gemäß einer vorteilhaften Ausgestaltung wird der Rotationsvektor für optische Marker abhängig von einer perspektivischen Verzerrung der Außenseiten des jeweiligen Markers berechnet.

Dadurch ist es vorteilhafterweise möglich, den Rotationsvektor, ohne eine aufwändige Bereitstellung eines Machine Learning basierten Modelansatzes oder eines anderen statistischen Modelansatzes bereitzustellen, wobei aus der perspektivischen Verzerrung der Außenseiten des jeweiligen optischen Markers unter Einsatz von Kantendetektion der Rotationsvektor oder ein abhängiger Eulerwinkel berechnen wird.

In einer vorteilhaften Weiterbildung der Erfindung wird der Rotationsvektor für optische Marker (5) abhängig von einer perspektivischen Verzerrung der drei Positionsmarken und/oder einer Ausrichtungsmarke eines QR-Codes berechnet.

Dadurch kann vorteilhafterweise eine Plausibilisierung des berechneten Rotationsvektors und/oder Eulerwinkels über die drei Positionsmarken vorgenommen werden.

Mit anderen Worten, wird für jede der drei perspektivisch verzerrten Positionsmarke der Rotationswinkel und/oder Eulerwinkel berechnet, wobei diese im Rahmen einer Plausibilisierungsprüfung nur mit einer geringen Toleranz abweichen dürfen.

Gemäß einer vorteilhaften Ausgestaltung wird wenigstens ein optischer Marker entlang einer Außenkontor und/oder einer möglichen Quetschkante des Anhängers angebracht.

Die Außenkontur bezeichnet die äußere Begrenzung oder Umrisslinie eines Objekts. In technischen Zeichnungen und CAD-Modellen wird die Außenkontur verwendet, um die Form und Größe eines Bauteils oder Produkts darzustellen. Sie definiert die äußerste Grenze des Objekts.

Die Quetschkante im Kontext eines Maschinenschutzes ist eine Stelle an einer Maschine, an der Körperteile oder Kleidung eingeklemmt und verletzt werden können. Diese Kanten entstehen oft an beweglichen Teilen, wie z.B. an Walzen, Pressen oder Scheren, wo zwei Teile aufeinander zu oder aneinander vorbei bewegt werden. Um Verletzungen zu vermeiden, werden Quetschkanten durch verschiedene Sicherheitsmaßnahmen geschützt, wie z.B. Schutzabdeckungen, Sicherheitsabstände oder Not-Aus-Schalter.

Dadurch ist es vorteilhafterweise möglich, eine separate Überwachung für einen Maschinen- und/oder Personenschutz bereitzustellen. Das ist deshalb der Fall, weil durch die Kamera, insbesondere ein Nahbereich um den jeweiligen optischen Marker überwacht wird und eine Bildverarbeitung in einem separaten Prozessor-Thread erfolgt.

Mit anderen Worten kann eine mögliche Kollision frühzeitiger erkannt werden, da die Bildverarbeitung zum einen in einem parallelen Prozessor-Thread ausgelagert werden kann und damit nicht auf eine Bereitstellung der Winkelerkennung warten muss und zum anderen eine frühzeitige Detektion einer möglichen Kollision durch eine Erkennung einer Verletzung eines um den optischen Marker herum definiertes Schutzfeld ermöglicht.

Das Schutzfeld im Kontext des Maschinenschutzes ist ein definierter Bereich um eine Maschine, der durch Sicherheitsvorrichtungen wie Lichtschranken, Laserscanner oder Druckmatten überwacht werden kann. Wenn eine Person oder ein Objekt in dieses Schutzfeld eindringt, wird die Maschine automatisch gestoppt oder in einen sicheren Zustand versetzt, um Unfälle und Verletzungen zu verhindern. Diese Schutzfelder sind besonders wichtig in Bereichen, in denen Maschinen mit hoher Geschwindigkeit oder großer Kraft arbeiten, um sicherzustellen, dass niemand in den Gefahrenbereich gelangt.

In einer vorteilhaften Weiterbildung der Erfindung wird der Rotationsvektor abhängig von einer Entfernungsschätzung zwischen der Kamera und dem betreffenden optischen Marker berechnet, wobei die Entfernungsschätzung abhängig ist von einer Gesamtzahl erfasster optischer Marker entlang einer Sichtlinie zum optischen Marker für den die Entfernung geschätzt wird.

Die Sichtlinie ist eine gerade Linie, die vom Auge eines Betrachters zu einem bestimmten Punkt oder Objekt verläuft. Sie spielt eine Rolle in der Sicherheitstechnik, um sicherzustellen, dass alle relevanten Bereiche gut einsehbar sind.

Die Entfernungsschätzung kann durch eine Zählung der erfassten Marker entlang der Sichtlinie zu einem ausgewählten optischen Marker erfolgen, wobei eine mit der Anzahl optischer Marker entlang der Sichtlinie korrespondierende Anzahl von Anhängern bestimmt wird und eine Addition der Längen der einzelnen Anhänger zu einer Schätzung der Entfernung oder auch Schätzung der Länge der Sichtlinie führt. Es sei auch erwähnt, dass dieser Ansatz der Entfernungsschätzung nur für einen Routenzug funktioniert, dessen Anhänger jeweils einen Gierwinkel von 0° gegenüber dem Zugfahrzeug aufweisen oder die Gierwinkel der einzelnen Anhänger sich in Summe hinsichtlich eines Betrags und Richtungssinn ausgleichen.

Um die Entfernungsschätzung für einen Einsatz mit beliebigen Gierwinkeln zu ertüchtigen, ist eine von den einzelnen Gierwinkeln abhängige längenmäßige Verkürzung der Sichtlinie zu berücksichtigen.

Dadurch kann vorteilhafterweise die Berechnung des Rotationsvektors mit einer höheren Genauigkeit bereitgestellt werden. Das ist deshalb der Fall, weil mit einer Kenntnis über eine Entfernung eines optischen Markers, dessen perspektivische Verzerrung besser berücksichtig werden kann.

Gemäß einer vorteilhaften Ausgestaltung werden in wenigstens einem optischen Marker Nutzdaten kodiert.

Dadurch ist es vorteilhafterweise möglich, durch ein Auslesen des optischen Markers mittels der Kamera, insbesondere Informationen zu einer Lastverteilung innerhalb des Anhängers zu erfassen.

Mit anderen Worten, das Auslesen der Nutzdaten des optischen Markers, kann vorteilhafterweise Auskunft über die Lastverteilung, insbesondere einer Höhe eines Schwerpunkts, des Anhängers geben und dadurch ein Fahrverhalten, insbesondere eine maximale Geschwindigkeit des Routenzugs, angepasst werden.

In einer vorteilhaften Weiterbildung der Erfindung werden die kodierten Nutzdaten wenigstens eines Markers jeweils für eine Bereitstellung einer geometrischen Abmessung des jeweiligen Anhängers, auf dem der Marker angebracht ist, verwendet.

Dadurch können vorteilhafterweise Informationen über eine Außenkontur des jeweiligen Anhängers für eine Kollisionsvermeidung verwendet werden.

Gemäß einer vorteilhaften Ausgestaltung umfassen die erfassten Nutzdaten einen Gierwinkelgrenzwert des jeweiligen Anhängers und wenn wenigstens ein berechneter Gierwinkel den jeweiligen Gierwinkelgrenzwert des Anhängers überschreitet, wird ein Notstop des Zugfahrzeugs oder eine Reduktion einer Fahrgeschwindigkeit des Routenzugs ausgelöst.

Der Notstop (oder Not-Aus) ist eine Sicherheitsvorrichtung oder Sicherheitsfunktion, die dazu dient, eine Maschine oder Anlage in einem Notfall sofort abzuschalten. Der Notstop wird in Situationen eingesetzt, in denen eine unmittelbare Gefahr für Personen oder Maschinen besteht, um Unfälle und Schäden zu verhindern.

Dadurch ist es vorteilhafterweise möglich eine Erhöhung der Maschinensicherheit bereitzustellen. Das ist deshalb der Fall, weil der Routenzug bei einer Überschreitung eines maximalen Gierwinkels für einen Anhänger einen Notstop auslöst und damit, insbesondere ein Umkippen eines Anhängers oder eine Kollision, insbesondere eine Selbstkollision zwischen zwei Anhängern des Routenzugs, verhindert.

Besonders vorteilhaft ist eine Reduktion einer Drehzahl an einem Antriebsrad um eine Überschreitung des Gierwinkelgrenzwerts des jeweiligen Anhängers, bei Zugfahrzeugen mit getrennt angetriebenen Antriebsrädern, insbesondere in einer Form eines Panzerantriebs, zu verhindern.

Besonders vorteilhaft kann zuvor eine Reduktion der Geschwindigkeit in Kombination mit einer Begrenzung des anhängerspezifischen Gierwinkels sein, womit ein Notstop vorteilhafterweise vermieden werden kann.

Gemäß einer vorteilhaften Ausgestaltung umfasst die Vorrichtung die Recheneinheit für eine zweite Positionsbestimmung für einen an den ersten Anhänger angehängten Anhänger, wobei die zweite Positionsbestimmung wenigstens abhängig vom Ergebnis der ersten Positionsbestimmung und einem zweiten Gierwinkel und der Länge des am ersten Anhänger angehängten Anhängers bereitgestellt wird.

Dadurch ist es vorteilhafterweise möglich die Positionsbestimmung in Form einer zweiten Positionsbestimmung für die Kopplung zwischen zwei Anhängern bereitzustellen und damit den Routenzug über einen Anhänger hinaus mit vorteilhafterweise einem gleichen Funktionsumfang aus Winkelerkennung und Positionsbestimmung zu verlängern.

In einer vorteilhaften Weiterbildung der Erfindung ist die Kamera entgegen einer primären Fahrtrichtung des Routenzugs an einer mastartigen Halterung, erhöht gegenüber den Anhängern, am Zugfahrzeug montiert, wobei ein Sichtfeld der Kamera wenigstens eine direkte Sichtlinie zu wenigstens einem optischen Marker aufweist.

Dadurch kann vorteilhafterweise ein sicherer Montageplatz für die Kamera bereitgestellt werden. Das ist deshalb der Fall, weil die Kamera erhöht auf einer mastartigen Halterung außerhalb eines üblichen Bewegungsradius eines Fahrers des Zugfahrzeugs ist und die Kamera auch durch mögliche Kollisionen mit dem ersten Anhänger des Routenzugs oder Umgebungselementen geschützt ist. Eine mit der Halterung erreichte erhöhte Einbauposition ermöglicht vorteilhafterweise auch eine bessere Erfassung der optischen Marker.

Besonders vorteilhaft ist eine leichte Abneigung der Kamera in Richtung eines Bodens, sodass eine Beeinflussung durch eine Hallenbeleuchtung verringert wird.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
Figur 1 ein Ausführungsbeispiel eines Routenzugs 1 mit drei Anhängern 3a,3b,3c;
Figur 2 ein Ausführungsbeispiel des Routenzugs 1 mit einem Anhänger 3; und
Figur 3 ein Ausführungsbeispiel des Routenzugs 1 mit einer vereinfachten Darstellung der drei Anhänger 3 aus einer Sicht einer Kamera 4 die auf einem Zugfahrzeug 2 montiert ist;
Figur 4 ein Ausführungsbeispiel des Routenzugs 1 in einer Seitenansicht;
Figur 5 ein Ausführungsbeispiel zu einer Beziehung zwischen Kamera 4 und einem optischen Marker 5 über einen Rotationsvektor; und
Figur 6 ein Ausführungsbeispiel des Routenzugs 1 mit einem Anhänger 3 und vier optischen Markern 5.

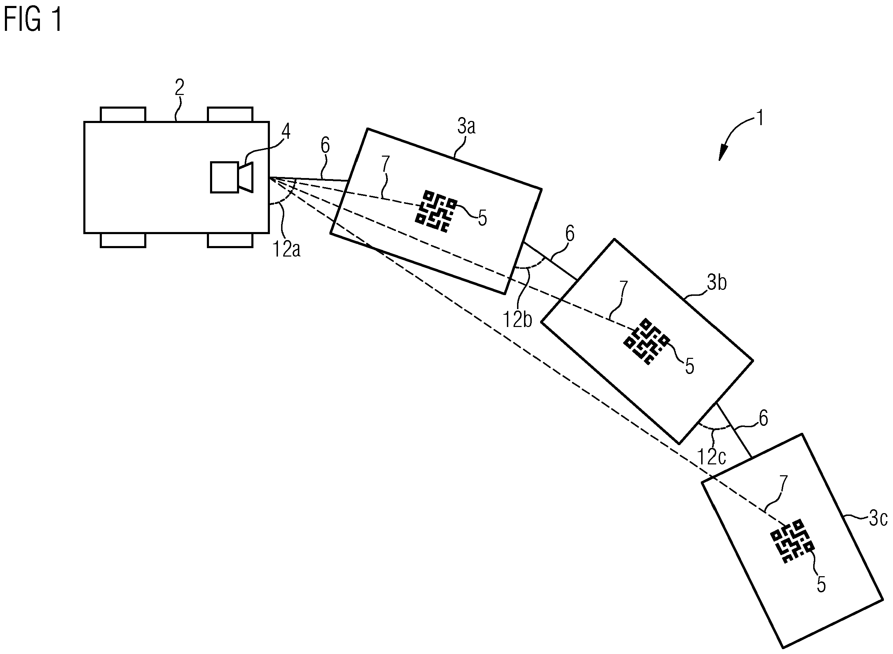

Die Figur 1 zeigt schematisch einen Routenzug 1 mit drei Anhängern 3a,3b,3c. Ein Anhänger 3 ist jeweils über eine Deichsel 6 mit einem anderen Anhänger 3 oder einem Zugfahrzeug 2 gekoppelt und die Anhänger 3a, 3b, 3c weisen je einen optischen Marker 5 auf, welche durch die Kamera 4 auf dem Zugfahrzeug 2 erfassbar sind.

Ein Gierwinkel 12a,12b,12c jedes Anhängers ist gemäß dem Stand der Technik sensorisch an der jeweiligen Deichsel erfassbar, wobei der Gierwinkel 12a einem ersten Gierwinkel zwischen einem Zugfahrzeug 2 und einem Anhänger 3 entspricht und die Gierwinkel 12b,c je einem zweiten Gierwinkel zwischen zwei Anhängern entsprechen. Mit steigender Zahl der Anhänger 3a, 3b, 3c steigt auch die Anzahl der verwendeten Sensoren linear an. In Figur 1 sind die Gierwinkelmesspunkte nur angedeutet, eine wirkliche Messung des Gierwinkels an der Deichsel 6 ist erfindungsgemäß nicht mehr nötig.

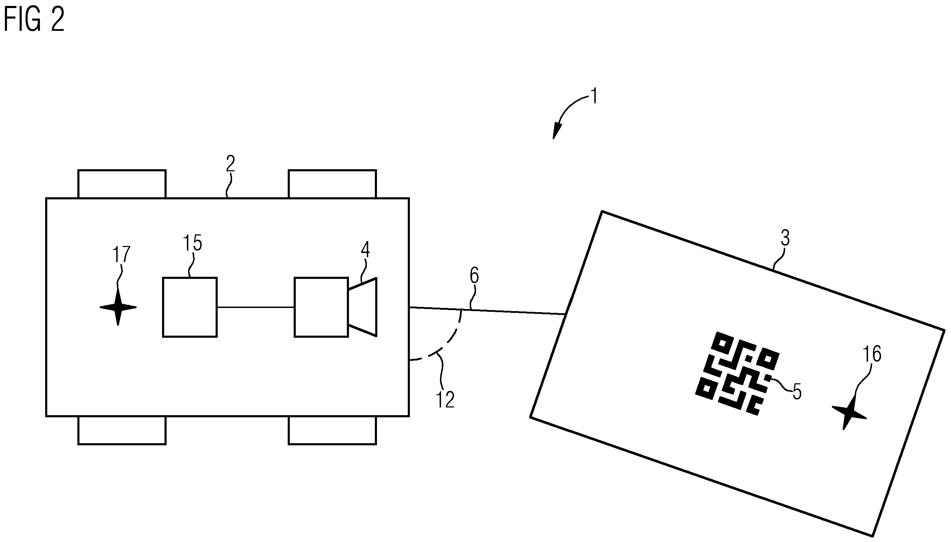

Die Figur 2 zeigt schematisch einen Routenzug 1 mit einem Anhänger 3 und einem Zugfahrzeug 2.

Das Zugfahrzeug umfasst eine Kamera 4 und eine Recheneinheit 15. Die Kamera 4 erfasst einzelne Bilder oder einen Videostream und stellt diesen der Recheneinheit 15 bereit. Die Recheneinheit 15 kann eine erste Positionsbestimmung bereitstellen.

Die erste Positionsbestimmung stellt eine Position 16 des Anhängers 3 relativ zur Kamera 4 bereit, wobei eine Position der Kamera 4 relativ zu einer Position 17 des Zugfahrzugs 2 sein kann.

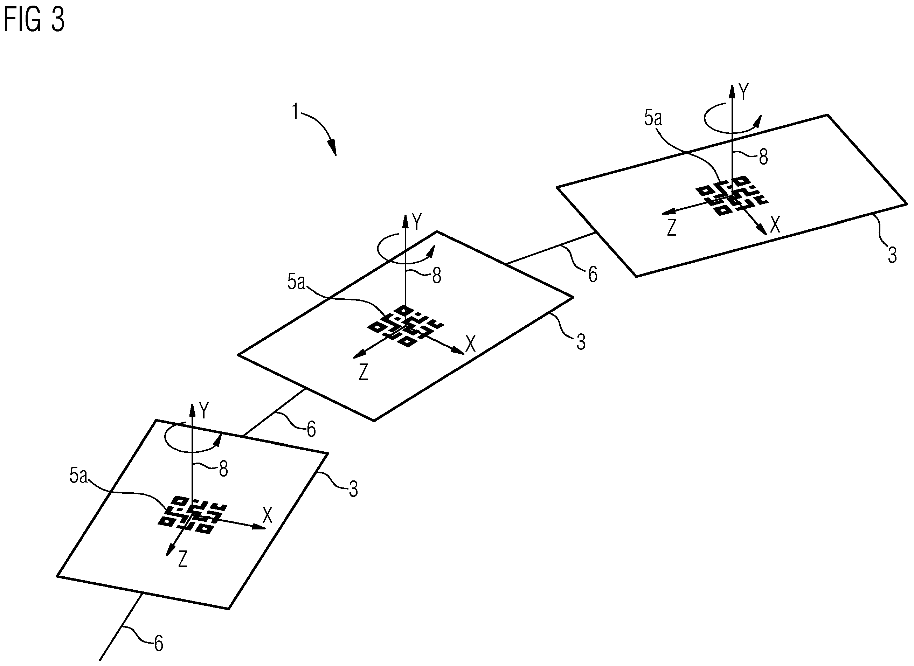

Die Figur 3 zeigt schematisch den Routenzug 1 mit einer vereinfachten Darstellung der drei Anhänger 3 aus einer Sicht einer Kamera 4 die auf einem Zugfahrzeug 2 montiert ist. Bei einer Verarbeitung eines erfassten Kamerabildes oder eines Videostreams wird hilfsweise ein Koordinatensystem 8 auf den jeweiligen perspektivisch verzerrten optischen Marker 5a projiziert. Anhand dieses Koordinatensystems 8 kann der Rotationsvektor visualisiert werden, insbesondere die Rotation um eine Y-Achse des Koordinatensystems 8, aus welcher der jeweilige Gierungswinkel berechnet werden kann.

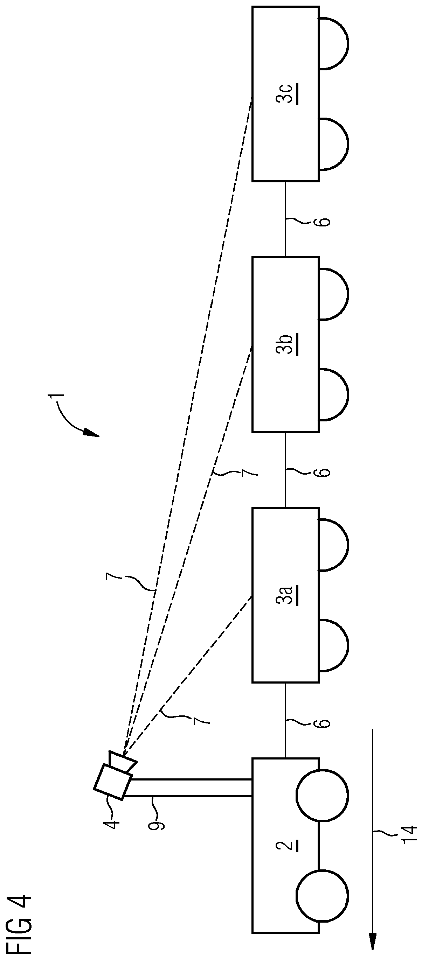

Die Figur 4 zeigt schematisch den Routenzug 1 mit einer primären Fahrtrichtung 14 in einer Seitenansicht, wobei das Zugfahrzeug 2 eine mastartige Halterung als einen Montageplatz 9 für eine Kamera 4 aufweist.

Die Kamera ist entgegen der primären Fahrtrichtung 14 ausgerichtet und weist eine leichte Neigung zu einem Untergrund auf, welcher durch den Routenzug 1 befahren wird. Die Kamera 4 erfasst die optischen Marker 5 der Anhänger 3a, 3b, 3c jeweils über eine Sichtlinie 7.

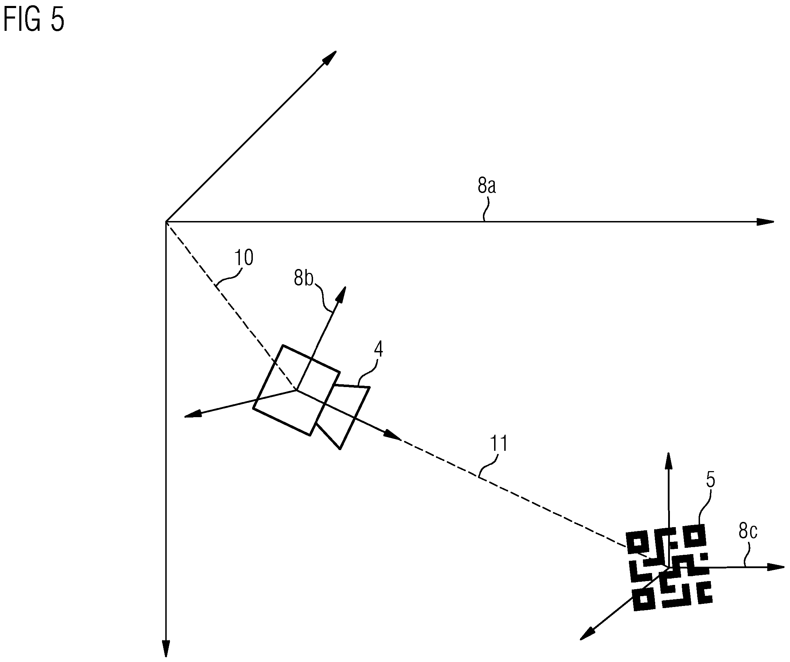

Die Figur 5 zeigt schematisch eine Beziehung zwischen Kamera 4 und einem optischen Marker 5 über einen Rotationsvektor. Ein erstes Koordinatensystem 8a repräsentiert die Zugfahrzeugposition 17 als ein Bezugssystem, ein zweites Koordinatensystem 8b repräsentiert eine Kameraposition als ein Bezugsystem und ein drittes Koordinatensystem 8c repräsentiert eine Anhängerposition 16 als ein Bezugsystem.

Mittels Koordinatentransformationen, in der Robotik auch Transforms genannt, können die verschiedenen Positionen zwischen den Koordinatensystemen gewandelt werden, sodass eine im Bezugsystem der Kamera 4 berechnete Anhängerposition 16, schließlich in eine entsprechende Position im Bezugssystem der Zugfahrzeugposition 17 umgerechnet werden kann. Die gestrichelten Linien 10,11 verdeutlichen einen Zusammenhang zwischen den Bezugssystemen und den benötigten Koordinatentransformationen.

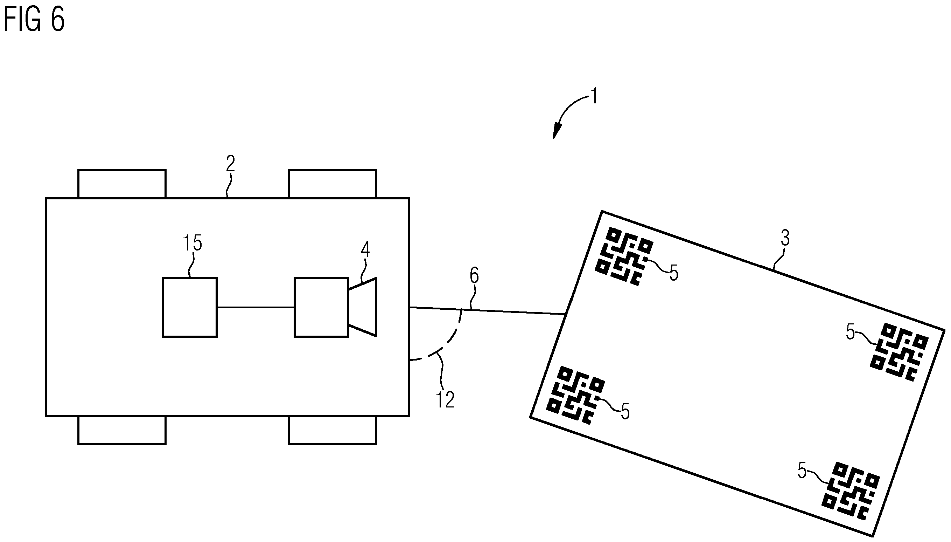

Die Figur 6 zeigt schematisch ein Zugfahrzeug 2 mit einer Recheneinheit 15 und einer Kamera 4 und einen Anhänger 3 mit vier optischen Markern 5. Die optischen Marker sind entlang einer Außenkante des Anhängers 3 angebracht und können mittels der Kamera 4 erfasst und als Daten an die Recheneinheit 15 übertagen werden. Mittels der Recheneinheit 15 kann anschließend in einer vierfachen Erfassung des Rotationsvektors eine Plausibilisierungsprüfung durchgeführt werden, bei der die vier optischen Marker in einer ähnlichen Weise rotiert sein müssen, um eine korrekte Positionsbestimmung zu gewährleisten.

In einem weiteren Einsatzfall können die optischen Marker 5 für eine frühe Detektion möglicher Gefahrensituationen dienen, wobei eine mögliche Quetschung von Passanten, vorzeitig detektiert werden soll. Hierzu erfasst die Kamera 4 die vier optischen Marker 5 und die Recheneinheit 15 überwacht ein Schutzfeld als eine die optischen Marker 5 umgebende virtuelle Pufferzone. Sobald ein Passant die Pufferzone verletzt, wird eine mögliche Quetschung des Passanten detektiert und es kann ein Notstop des Routenzugs erfolgen.

Gleichartige, gleichwertige oder gleichwirkende Elemente können in einer der Figuren oder in den Figuren mit denselben Bezugszeichen versehen sein.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Routenzug
- 2: Zugfahrzeug
- 3: Anhänger
- 4: Kamera
- 5: optischer Marker
- 5a: optische Marker mit perspektivischer Verzerrung
- 6: Deichsel
- 7: Sichtlinie
- 8: Koordinatensystem
- 8a: Erstes Koordinatensystem
- 8b: Zweites Koordinatensystem
- 8c: Drittes Koordinatensystem
- 9: Montageplatz
- 10: Erste Koordinatentransformation
- 11: Zweite Koordinatentransformation
- 12: Gierwinkel
- 12a: Erster Gierwinkel
- 12b: Zweiter Gierwinkel
- 12c: Dritter Gierwinkel
- 13: Mastartige Halterung
- 14: Primäre Fahrtrichtung
- 15: Recheneinheit
- 16: Anhängerposition
- 17: Zugfahrzeugposition

## Patentansprüche

1. Verfahren zu einer Winkelbestimmung von einzelnen Komponenten eines Routenzugs (1), wobei die Komponenten mindestens einen Anhänger (3) und ein Zugfahrzeug (2) umfassen, wobei
- eine Berechnung eines Gierwinkels (12) wenigstens eines der Anhänger (3) in einer Abhängigkeit zu einer räumlichen Orientierung bezüglich des Zugfahrzeugs (2) erfolgt,
**gekennzeichnet durch** folgende Schritte:
- Anbringen von wenigstens einem optischen Marker (5) an wenigstens einem Anhänger (3);
- Erfassen von wenigstens einem optischen Marker (5) an wenigstens einem Anhänger (3) mittels einer Kamera (4);
- Berechnen eines Rotationsvektors für wenigstens einen erfassten optischen Marker (5) pro Anhänger (3);
- wobei die Berechnung des Gierwinkels (12) für wenigstens einen Anhänger (3) des Routenzugs (1) in Abhängigkeit von dem Rotationsvektor erfolgt; und
- eine erste Positionsbestimmung für einen mit dem Zugfahrzeug (1) direkt gekoppelten ersten Anhänger (3a), welche relativ zur Position der Kamera (4) bereitgestellt wird, wobei die erste Positionsbestimmung von einem ersten Gierwinkel (12a) des ersten Anhängers (3a) und einer Länge des ersten Anhängers (3a) abhängig ist und als ein Ergebnis eine Position des ersten Anhängers (3a) bereitgestellt wird.

2. Verfahren gemäß Anspruch 1, **gekennzeichnet dadurch, dass** eine zweite Positionsbestimmung für einen an den ersten Anhänger (3a) angehängten zweiten Anhänger (3b) bereitgestellt wird, wobei die zweite Positionsbestimmung wenigstens abhängig von dem Ergebnis der ersten Positionsbestimmung und einem zweiten Gierwinkel (12b) und der Länge des am ersten Anhänger (3a) angehängten zweiten Anhängers (3b) bereitgestellt wird.

3. Verfahren gemäß einem der vorherigen Ansprüche, **gekennzeichnet dadurch, dass** durch eine Überquerung wenigstens einer virtuellen Landmarke und/oder während einer Befahrung eines vorgegebenen Areals durch das Zugfahrzeug (2) die Kamera (4) gestartet wird und einen Videostream erfasst.

4. Verfahren gemäß einem der vorherigen Ansprüche, **gekennzeichnet dadurch, dass** durch ein neuronales Netz der Rotationsvektor berechnet wird.

5. Verfahren gemäß einem der vorherigen Ansprüche, **gekennzeichnet dadurch, dass** der Rotationsvektor für optische Marker (5) abhängig von einer perspektivischen Verzerrung der Außenseiten des jeweiligen Markers berechnet wird.

6. Verfahren gemäß einem der vorherigen Ansprüche, **gekennzeichnet dadurch, dass** der Rotationsvektor für optische Marker (5) abhängig von einer perspektivischen Verzerrung der drei Positionsmarken und/oder einer Ausrichtungsmarke eines QR-Codes berechnet wird.

7. Verfahren gemäß einem der vorherigen Ansprüche, **gekennzeichnet dadurch, dass** wenigstens ein optischer Marker (5) entlang einer Außenkontor und/oder einer möglichen Quetschkante des Anhängers (3) angebracht wird.

8. Verfahren gemäß Anspruch 5, **gekennzeichnet dadurch, dass** der Rotationsvektor abhängig von einer Entfernungsschätzung zwischen der Kamera (4) und dem betreffenden optischen Marker (5) berechnet wird, wobei die Entfernungsschätzung abhängig ist von einer Gesamtzahl erfasster optischer Marker (5) entlang einer Sichtlinie (7) zum optischen Marker (5) für den die Entfernung geschätzt wird.

9. Verfahren gemäß einem der vorherigen Ansprüche, **gekennzeichnet dadurch, dass** in wenigstens einem optischen Marker (5) Nutzdaten kodiert werden.

10. Verfahren gemäß Anspruch 9, **gekennzeichnet dadurch, dass** die kodierten Nutzdaten wenigstens eines Markers (5) jeweils für eine Bereitstellung einer geometrischen Abmessung des jeweiligen Anhängers (3), auf dem der Marker (5) angebracht ist, verwendet werden.

11. Verfahren gemäß Anspruch 9 oder 10, **gekennzeichnet dadurch, dass** die erfassten Nutzdaten einen Gierwinkelgrenzwert des jeweiligen Anhängers (3) umfassen und wenn wenigstens ein berechneter Gierwinkel (12) den jeweiligen Gierwinkelgrenzwert des Anhängers (3) überschreitet ein Notstop des Zugfahrzeugs (2) oder eine Reduktion einer Fahrgeschwindigkeit des Routenzugs (1) ausgelöst wird.

12. Vorrichtung zu einer Winkelbestimmung von einzelnen Komponenten eines Routenzugs (1), wobei die Komponenten mindestens einen Anhänger (3) und ein Zugfahrzeug (2) umfassen, wobei eine Recheneinheit (15) für eine Berechnung eines Gierwinkels (12) wenigstens eines Anhängers (3) in einer Abhängigkeit zu einer räumlichen Orientierung bezüglich des Zugfahrzeugs (2) ausgebildet ist,
**dadurch gekennzeichnet, dass**
eine Kamera (4), welche am Zugfahrzeug (2) angeordnet ist, die dazu ausgebildet ist wenigstens einen an den Anhänger (3) angebrachten optischen Marker (5) zu erfassen und der Recheneinheit (15) bereitzustellen, wobei die Recheneinheit (15) dazu ausgebildet ist, wenigstens einen Rotationsvektor für wenigstens einen erfassten optischen Marker (5) pro Anhänger (3) zu berechnen und die Berechnung des Gierwinkels (12) für wenigstens einen Anhänger (3) des Routenzugs (1) in Abhängigkeit von dem Rotationsvektor erfolgt, wobei die Recheneinheit (15) für eine erste Positionsbestimmung für einen mit dem Zugfahrzeug (1) direkt gekoppelten ersten Anhänger (3a) ausgebildet ist, wobei die erste Positionsbestimmung relativ zur Position der Kamera (4) erfolgt, wobei die erste Positionsbestimmung von dem Gierwinkel (12) des ersten Anhängers (3a) und einer Länge des ersten Anhängers (3a) abhängig ist und als ein Ergebnis eine Position des ersten Anhängers (3a) bereitstellt.

13. Vorrichtung gemäß Anspruch 12, **gekennzeichnet dadurch, dass** die Recheneinheit (15) für eine zweite Positionsbestimmung für einen an den ersten Anhänger (3a) angehängten Anhänger (3b) ausgebildet ist, wobei die zweite Positionsbestimmung wenigstens abhängig vom Ergebnis der ersten Positionsbestimmung und einem zweiten Gierwinkel und der Länge des am ersten Anhänger (3a) angehängten Anhängers (3b) bereitgestellt wird.

14. Vorrichtung gemäß Anspruch 12 oder 13, **gekennzeichnet dadurch, dass** die Kamera (4) entgegen einer primären Fahrtrichtung des Routenzugs (1) an einer mastartigen Halterung (13), erhöht gegenüber den Anhängern (3a, 3b, 3c), am Zugfahrzeug (2) montiert ist, wobei ein Sichtfeld der Kamera (4) wenigstens eine direkte Sichtlinie (7) zu wenigstens einem optischen Marker aufweist.
